# EUROPÄISCHE PATENTSCHRIFT

(11) **EP 0 640 856 B1**
(45) Veröffentlichungstag und Bekanntmachung des Hinweises auf die Patenterteilung: **25.11.1998**
(21) Anmeldenummer: 94112081.8
(22) Anmeldetag: 03.08.1994
(51) Int. Cl.: G02B 7/06

(54) **Binokulares Fernglas**
Binocular telescope
Télescope binoculaire

(30) Priorität: 28.08.1993 DE 4329049
(43) Veröffentlichungstag der Anmeldung: 01.03.1995
(73) Patentinhaber: Carl Zeiss, D-89518 Heidenheim (Brenz) (DE); CARL ZEISS-STIFTUNG HANDELND ALS CARL ZEISS, D-89518 Heidenheim (Brenz) (DE)
(72) Erfinder: Dross, Heinrich, D-35630 Ehringshausen-Daubhausen (DE)

(56) Entgegenhaltungen:
- CH-A- 425 267
- DE-B- 1 203 976
- DE-C- 4 124 584
- GB-A- 765 272
- US-A- 2 581 865
- US-A- 5 028 123

## Beschreibung

Die Erfindung betrifft ein binokulares Fernglas nach dem Oberbegriff des ersten Patentanspruches.

Binokulare Fernrohre, in welchen mindestens ein verstellbares optisches Teil enthalten ist, sind aus dem Stand der Technik bestens bekannt. Die Verstellung des optischen Teils dient dabei z.B. dem Sehfehlerausgleich, der Scharfeinstellung, der Veränderung der Vergrößerung, ... . Beispielhaft sei auf die Schutzrechte EP-PS 0 152 056, DE-PS 2 316 955, DE-G 7 435 008 und DE-G 1 843 837 verwiesen.

Dabei ist es gut, wenn sich der Verstellknopf in einer ergonomisch günstigen Position befindet.

Aus der CH-A-425 267 und auch aus der GB-A-765 272 ist eine Fokussiereinrichtung mit einem durchgehenden Achsenkörper, insbesondere für binokulare Fernrohre, bekannt, bei welcher jeweils ein Verstellknopf okular- und objektivseitig angeordnet ist.

Es ist die Aufgabe der Erfindung ein binokulares Fernrohr mit einem durchgehenden Achsenkörper zu schaffen, wobei der Verstellknopf um den Achsenkörper angeordnet ist.

Diese Aufgabe wird erfindungsgemäß durch den kennzeichnenden Teil des ersten Patentanspruchs gelöst.

Das erfindungsgemäße Fernglas besitzt einen sehr kompakten Aufbau trotz sehr stabiler Führung der beiden Fernrohrhälften durch einen durchgehenden Achsenkörper.

Da der Verstellmechanismus in der Achse des Achsenkörpers angeordnet ist, erhält man eine optimale Gewichtsverteilung.

Ein weiterer Vorteil ist die ergonomisch günstige Anordnung des Verstellknopfes in den Achsenkörper.

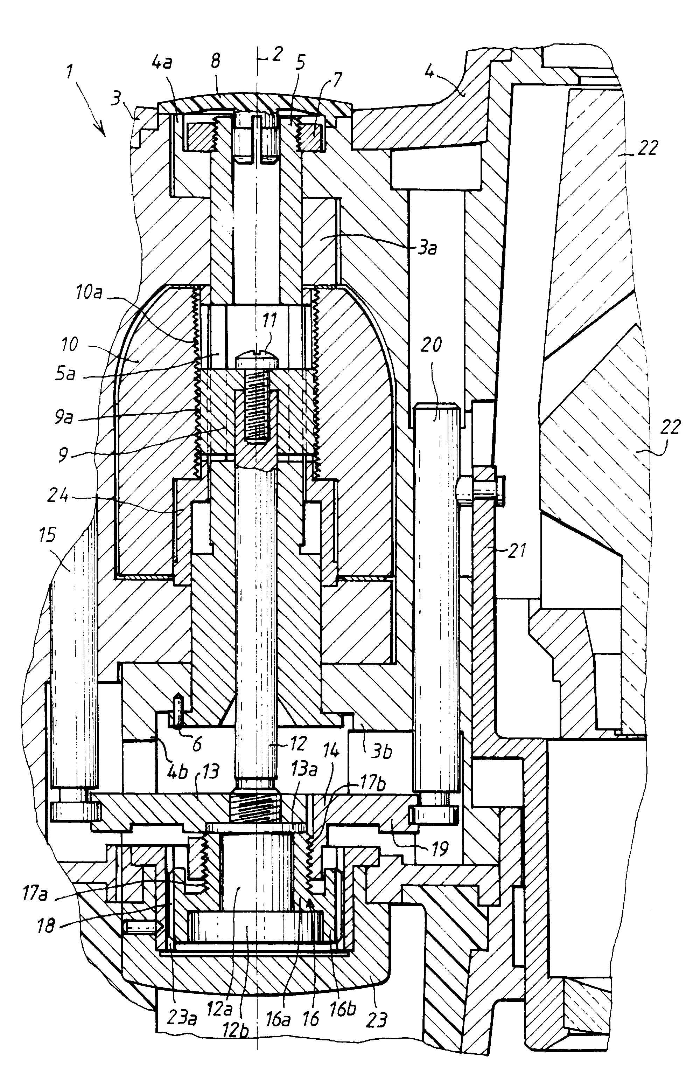

Die Erfindung wird nachfolgend anhand der einzigen Figur beispielhaft erläutert, wobei weitere wesentliche und erfinderische Merkmale beschrieben sind.

Der in der Figur dargestellte Bereich eines binokularen Fernglases (1) zeigt im wesentlichen den Bereich um die Gelenkachse (2) sowie Teile des Gehäuses (3, 4) der beiden Fernrohrhälften im Schnitt.

In der Gelenkachse (2) ist ein monolithischer Achsenkörper (5) vorhanden. Dieser Achsenkörper (5) ist durch die Öffnungen einer Fernrohrhälfte (4) in zwei seitlichen Auslegern (4a, 4b) geführt und über eine Stiftsicherung (6) und einen Vorschraubring (7) fest mit dieser rechten Fernrohrhälfte (4) verbunden. An diesem Achsenkörper (5) ist die linke Fernrohrhälfte (3) mit zwei Auslegern (3a, 3b) drehbar befestigt, wobei auch hier der kreisrunde Achsenkörper (5) durch entsprechende Öffnungen der entsprechenden Ausleger (3a, 3b) geht. An einem seiner Enden ist der Achsenkörper (5) durch eine lösbare Kappe (8) verschlossen. Die Bewegung der beiden Fernrohrhälften (3, 4) zueinander ist somit durch einen einzigen Achsenkörper (5) definiert.

Der kreisrunde Achsenkörper (5) besitzt im mittleren Bereich eine längliche Öffnung (5a), in welcher ein flacher Stegkörper (9) geführt ist. Dieser Stegkörper (9) besitzt ein Außengewinde (9a), welches in ein Innengewinde (10a) eines als Triebrad dienenden Walzenkörpers (10) eingreift. Der Walzenkörper (10) wird über ein Führungselement (24) am Achsenkörper (5) geführt. Durch Drehung des Walzenkörpers (10) wird so über die Gewinde (10a, 9a) der flache Stegkörper (9) achsial parallel zu den optischen Achsen und parallel zur Gelenkachse (2) bewegt.

Der Stegkörper (9) ist mit einer Schraube (11) fest mit einer Mitteltriebstange (12) verbunden. An der Mitteltriebstange (12) ist fest eine der beiden Mitnehmerscheiben (13, 14) verbunden. Die fest mit der Mitteltriebstange (12) verbundene Mitnehmerscheibe (13) greift an einer ersten Schubstange (15) an, die ihre Bewegungen auf eine Fassung (in der Figur nicht dargestellt; andere Fernrohrhälfte äquivalent) mit optischen Bauteilen (in der Figur nicht dargestellt; andere Fernrohrhälfte äquivalent) überträgt, wodurch diese optischen Bauteile zu einer Bewegung in der optischen Achse der zu dieser Fernrohrhälfte (3) gehörenden weiteren optischen Bauteile veranlaßt werden. In der Verlängerung hinter der Mitnehmerscheibe (13) ist die Mitteltriebstange (12) als verdickter Zylinderring (12a) ausgeführt und endet in einer im Durchmesser nochmals vergrößerten Zylinderscheibe (12b), welche mit dem Zylinderring (12a) fest verbunden ist.

Um den Zylinderring (12a) ist ein zu diesem beweglicher rohrförmiger Ring (16) frei drehbar gelegt, welcher durch die Zylinderscheibe (12b) und die an der Mitnehmerscheibe (13) fest verbundene weitere Zylinderscheibe (13a) achsial fest gelagert ist.

Dieser Ring (16) besteht aus einem direkt um den Zylinderring (12a) angeordneten Rohrkörper (16a) mit Außengewinde (17a) und einen mit diesem fest verbundenen Ringkörper (16b) mit Außenverzahnung (18). An dem Außengewinde (17a) liegt das Innengewinde (17b) einer weiteren Mitnehmerscheibe (19) an. Diese Mitnehmerscheibe (19) greift über eine zweite Schubstange (20) auf eine Fassung (21) mit optischen Bauteilen (22) in dem Fernrohrgehäuse (4) an und überträgt so ihre axiale Bewegung auf diese optischen Bauteile (22), welche sich dann in der optischen Achse der zu dieser Fernrohrhälfte (4) gehörenden weiteren optischen Bauteile (Okular, Objektiv, usw.) bewegen.

Um den rohrförmigen Ring (16) herum ist ein Triebknopf (23) mit Innenverzahnung (23a) angeordnet. Eine Drehung dieses Triebknopfes (23) wird durch die Verzahnung (23a, 18) auf den Ring (16) übertragen, welcher sich dann mitdreht. Eine Drehung des Rings (16) führt aber zu einer Vertikalbewegung der Mitnehmerscheibe (19) durch die Gewinde (17a, 17b) und somit zur Bewegung der Schubstange (20). Dabei bleibt die Mitnehmerscheibe (13) mit der zu ihr gehörenden Schubstange (15) von dieser Bewegung unbeeinflußt.

Wird hingegen die Mitteltriebstange (12) axial bewegt, so folgen beide Mitnehmerscheiben (13, 19) dieser Bewegung, ohne daß der Triebknopf (23) mitbewegt wird (wegen der Verzahnung (18, 23a)). Die mit diesem Fernglas (1) beschriebene Anordnung dient zur gemeinsamen Fokussierung (mittels Walzenkörper (10)) und zum Sehfehlerausgleich (mittels Triebknopf (23)).

Selbstverständlich können durch den Walzenkörper (10) auch andere optische Bauteile im Fernglas (1) bewegt werden, wenn man z.B. eine Veränderung der Vergrößerung in beiden Fernglashälften erreichen möchte. Dann muß zusätzlich eine weitere erfindungsgemäße oder nach dem bekannten Stand der Technik aufgebaute Anordnung für die Fokussierung verwendet werden.

## Patentansprüche

1. Binokulares Fernrohr (1) mit mindestens einem verstellbaren optischen Bauteil (22) und mit zwei Fernrohrhälften (3, 4), wobei jede der Fernrohrhälften (3, 4) aus einem Gehäuserohr besteht, in denen jeweils ein Okular und ein Objektiv angeordnet sind, die jeweils eine optische Achse definieren, wobei das oder die verstellbaren optischen Bauteile (22) zwischen Okular und Objektiv angeordnet sind, wobei in einer im wesentlichen parallel zu den optischen Achsen ausgerichteten weiteren Achse (2) ein Achsenkörper (5) zwischen den beiden Fernrohrhälften (3, 4) angeordnet ist, wobei in diesem Achsenkörper (5) ein Längsschlitz (5a) angebracht ist, wobei in diesem Längsschlitz (5a) ein in der Längsachse des Achsenkörpers (5) verschiebbarer Verstellkörper (9) angeordnet ist, wobei der Verstellkörper (9) von außerhalb des Fernrohres (1) im Längsschlitz (5a) verstellbar ist, wobei der Verstellkörper (9) mit dem oder den bewegbaren optischen Bauteilen (22) in mindestens einer Fernrohrhälfte (3, 4) gekoppelt ist, wobei an dem Verstellkörper (9) ein Außengewinde (9a) angebracht ist und wobei ein von außerhalb des Fernrohres (1) zugänglicher erster Einstellknopf (10) am Fernrohr (1) angebracht ist, dadurch gekennzeichnet, daß der erste Einstellknopf (10) um den Verstellkörper (9a) angeordnet ist, daß der erste Einstellknopf (10) ein Innengewinde (10a) aufweist, und daß das Außengewinde (9a) des Verstellkörpers (9) in das Innengewinde (10a) des Einstellknopfes (10a) eingreift.

2. Binokulares Fernrohr nach Anspruch 1, dadurch gekennzeichnet, daß das bewegbare optische Teil (22) das optische Teil zur Fokussierung ist.

3. Binokulares Fernrohr nach Anspruch 1, dadurch gekennzeichnet, daß das bewegbare optische Teil (22) das optische Teil zum Sehfehlerausgleich ist.

4. Binokulares Fernrohr nach einem der Ansprüche 1 bis 3, dadurch gekennzeichnet, daß die weitere Achse (2) als Gelenkachse für die beiden Fernrohrhälften (3, 4) verwendet ist.

5. Binokulares Fernrohr nach einem der Ansprüche 1 bis 4, dadurch gekennzeichnet, daß der Achsenkörper (5) ein runder Längsstab ist.

6. Binokulares Fernrohr nach einem der Ansprüche 1 bis 5, dadurch gekennzeichnet, daß der Verstellkörper (9) mit einem Innenkörper (16) eines Triebknopfes (23) verbunden ist, daß der Innenkörper (16) des Triebknopfes (23) frei drehbar an dem Verstellkörper (9) befestigt ist, daß am Innenkörper (16) eine Außenverzahnung (18) angebracht ist, daß am Triebknopf (23) eine Innenverzahnung (23a) angebracht ist, daß die Außenverzahnung (18) des Innenkörpers (16) in die Innenverzahnung (23a) des Triebknopfes (23) eingreifend ist und ein Gelenkarm (19) so mit dem Innenkörper (16) des Triebknopfes (23) verbunden ist, daß eine Drehung des Triebknopfes (23) mindestens ein optisches Teil (22) in einer der Fernrohrhälften (3, 4) in seiner axialen Lage verändert.

7. Binokulares Fernrohr nach Anspruch 6, dadurch gekennzeichnet, daß an dem Innenkörper (16) des Triebknopfes (23) ein Gewinde (17a) angebracht ist, daß an dem Gelenkarm (19) ein Gewinde (17b) angebracht ist, daß die beiden Gewinde (17a, 17b) ineinander eingreifend ausgeführt sind.

8. Binokulares Fernrohr nach einem der Ansprüche 6 oder 7, dadurch gekennzeichnet, daß der Triebknopf (23) okularseitig angeordnet ist.

## Claims

1. Binocular telescope (1) comprising at least one adjustable optical component (22) and two telescope halves (3, 4), whereby each of the telescope halves (3, 4) comprises a housing tube in each of which an ocular and an objective lens are arranged which each define a respective optical axis, whereby the adjustable optical component (22) is arranged between the ocular and the objective lens, whereby a shaft body (5) is arranged between both telescope halves(3, 4) along a further axis (2) aligned essentially parallel to the optical axes, whereby the body shaft (5) comprises a longitudinal slot (5a), whereby an adjusting body (9) being movable in the longitudinal direction of the body shaft (5) is arranged in the longitudinal slot, whereby the adjusting body (9) is movable in the longitudinal slot (5a) from outside of the telescope (1), whereby the adjusting body (9) is coupled with the movable optical component (22) or the movable optical components in at least one of the telescope halves (3, 4), whereby the adjusting body (9) comprises an external thread (9a) and whereby a first adjusting button (10) being accessible from outside of the telescope (1) is arranged at the telescope (1), characterized in that the first adjusting button (10) is arranged around the adjusting body (9), that the first adjusting button (10) comprises an internal thread (10a) and that the external thread (9a) ofthe adjusting body (9) is in engagement with the internal thread of the adjusting button (10).

2. Binocular telescope of claim 1, characterized in that the adjustable optical component (22) is the optical component for focusing.

3. Binocular telescope of claim 1, characterized in that the adjustable optical component (22) is the optical component for compensation of visual defects.

4. Binocular telescope of one of the claims 1 to 3, characterized in that the further axis (2) is used as a hinge shaft for both telescope halves (3, 4).

5. Binocular telescope of one of the claims 1 to 4, characterized in that the shaft body (5) is a round longitudinal rod.

6. Binocular telescope of one of the claims 1 to 5, characterized in that the adjusting body (9) is connected to an inner body (16) of a drive knob (23), that the inner body (16) of the drive knob (23) is connected, freely rotatable, to the adjusting body (9), that at the inner body (16) an external toothing (18) is provided, that at the drive knob (23) an internal toothing is provided, that the external toothing (18) of the inner body (16) engages to the internal toothing (23a) of the drive knob (23) and that a bracket (19) is connected to the inner body (16) of the drive knob (23) so that a rotation ofthe drive knob (23) changes the position in axial direction of at least one optical component (22) in one of the telescope halves (3, 4).

7. Binocular telescope of claim 6, characterized in that the inner body (16) of the drive knob (23) comprises a thread (17a) that the bracket (19) comprises a thread (17b) and that both threads (17a, 17b) are in engagement one with the other.

8. Binocular telescope of claim 6 or 7, characterized in that the drive knob (23) is arranged on the ocular side.

## Revendications

1. Jumelle binoculaire (1) avec au moins un composant optique réglable (22) et deux lunettes (3, 4) composées chacune d'un boîtier tubulaire qui abritent respectivement un oculaire et un objectif définissant respectivement un axe optique, où le ou les composants optiques réglables (22) sont disposés entre l'oculaire et l'objectif, où un corps d'axe (5) est disposé entre les deux lunettes (3, 4) dans un autre axe (2) sensiblement parallèle aux axes optiques, où une fente longitudinale (5a) est aménagée sur ce corps d'axe (5), où une pièce cylindrique (9) réglable dans l'axe longitudinal du corps d'axe (5) est disposée dans ladite fente longitudinale (5a), où le déplacement de la pièce cylindrique (9) dans la fente longitudinale (5a) peut être commandé de l'extérieur de la jumelle (1), où la pièce cylindrique (9) est accouplée au composant ou aux composants optiques mobiles (22) contenus dans l'une au moins des lunettes (3, 4), où la pièce cylindrique (9) est munie d'un filetage extérieur (9a) et où une première molette de réglage (10) accessible de l'extérieur est aménagée sur la jumelle (1), caractérisée en ce que la première molette de réglage (10) est disposée autour de la pièce cylindrique (9), que la première molette de réglage (10) présente un filetage intérieur (10a) et que le filetage extérieur (9a) de la pièce cylindrique (9) s'engage dans le filetage intérieur (10a) de la molette de réglage (10).

2. Jumelle binoculaire selon la revendication 1, caractérisée en ce que le composant optique mobile (22) est l'élément optique servant à la mise au point.

3. Jumelle binoculaire selon la revendication 1, caractérisée en ce que le composant optique mobile (22) est l'élément optique servant à la compensation de l'écart de vision.

4. Jumelle binoculaire selon l'une quelconque des revendications 1 à 3, caractérisée en ce que l'autre axe (2) forme un axe articulé pour les deux lunettes (3, 4).

5. Jumelle binoculaire selon l'une quelconque des revendications 1 à 4, caractérisée en ce que le corps d'axe (5) est une tige longitudinale de profil circulaire.

6. Jumelle binoculaire selon l'une quelconque des revendications 1 à 5, caractérisée en ce que la pièce cylindrique (9) est reliée à la bague tubulaire intérieure (16) d'une molette de commande (23), que la bague tubulaire intérieure (16) de la molette de commande (23) est montée sur la pièce cylindrique (9) de façon à être mobile en rotation, que la bague tubulaire intérieure (16) présente un engrenage extérieur (18), que la molette de réglage (23) présente un engrenage intérieur (23a), que l'engrenage extérieur (18) de la bague tubulaire intérieure (16) s'engage dans l'engrenage intérieur (23a) de la molette de réglage (23) et qu'un bras articulé (19) est relié à la bague tubulaire intérieure (16) de la molette de commande (23), de manière à ce qu'une rotation de la molette de réglage (23) entraîne un déplacement axial d'un composant optique (22) au moins dans l'une des lunettes (3, 4).

7. Jumelle binoculaire selon la revendication 6, caractérisée en ce qu'un filetage intérieur (17a) est aménagé sur la bague tubulaire intérieure (16) de la molette de réglage (23), qu'un filetage (17b) est aménagé sur le bras articulé (19) et que les deux filetages (17a, 17b) sont exécutés de manière à s'engager l'un dans l'autre.

8. Jumelle binoculaire selon l'une des revendications 6 ou 7, caractérisée en ce que la molette de réglage (23) est disposée du côté des oculaires.
